# EUROPÄISCHE PATENTANMELDUNG

(11) **EP 4 541 704 A1**
(43) Veröffentlichungstag der Anmeldung: **23.04.2025**
(21) Anmeldenummer: 24206403.8
(22) Anmeldetag: 14.10.2024
(51) Int. Cl.: B62K 19/34, B62M 6/55

(54) **BEFESTIGUNGSANORDNUNG FÜR EINEN FAHRRADANTRIEB**

(30) Priorität: 19.10.2023 DE 102023210275
(71) Anmelder: ZF Friedrichshafen AG, 88046 Friedrichshafen (DE)
(72) Erfinder: Varenkamp, Marco, 88046 Friedrichshafen (DE); Otta, Josef, 88677 Markdorf (DE)
(74) Vertreter: ZF Friedrichshafen AG

(57) **Zusammenfassung**

Die Erfindung bezieht sich auf eine Befestigungsanordnung für eine Befestigung eines Fahrradantrieb (22) an einem Fahrradrahmen (10). Die Befestigungsanordnung weist ein Befestigungsmittel (40) und ein Dämpfungselement (42) auf. Das Dämpfungselement (42) ist zwischen dem Befestigungsmittel (40) und einem Halteelement angeordnet. Das Halteelement ist als Fahrradrahmen (10) oder Fahrradantrieb (22) ausgebildet. Zudem bezieht sich die Erfindung auf ein Fahrrad.

## Beschreibung

### Technisches Gebiet

Die vorliegende Erfindung bezieht sich auf eine Befestigungsanordnung für eine Befestigung eines Fahrradantriebs an einem Fahrradrahmen. Zudem bezieht sich die vorliegende Erfindung auf ein Fahrrad.

### Stand der Technik

Fahrräder weisen einen Fahrradantrieb auf, um beispielsweise eine Antriebskraft für jeweilige Laufräder bereitzustellen. In dem Fahrradantrieb kann es dabei zu Schwingungen kommen. Gerade wenn das Fahrrad als Pedelec ausgebildet ist und der Fahrradantrieb einen Elektromotor aufweist, kann dabei ein Teil der Schwingungen eine nahezu konstante Frequenz aufweisen. Die Schwingungen können dabei an einen Fahrradrahmen übertragen werden und diesen ebenfalls in Schwingung versetzen. Es kann sich dabei um Körperschall handeln. Dieser Körperschall kann für einen Benutzer unangenehm hörbar sein. Üblicherweise sind Fahrradrahmen hohl und können als Schallverstärker, ähnlich wie ein Körper eines Lautsprechers, fungieren. Sofern die Schwingungen dabei nahe an einer Resonanzfrequenz des Fahrradrahmens sind, kann es zu einer erheblichen Geräuschentwicklung beim Fahren kommen. Die durch den Elektromotor verursachten Schwingungen können dabei auch an unerwarteter Stelle hörbar sein, beispielsweise im Bereich eines Steuersatzes, und so für zusätzliche Irritation beim Benutzer sorgen.

Eine solche Geräuschentwicklung kann durch eine geeignete Abstimmung des Fahrradantriebs auf den Fahrradrahmen verringert oder sogar gänzlich vermieden werden. Allerdings ist eine solche Abstimmung aufwendig und kann eine Modifikation des Fahrradrahmens oder des Fahrradantriebs erfordern, was nicht immer gewünscht ist. Zudem sind Fahrradantriebe häufig Zukaufteile, welche von Fahrradherstellern in unterschiedlichen Fahrrädern verbaut werden. Zudem gibt es Fahrräder oft in unterschiedlichen Größen und damit mit unterschiedlichen Fahrradrahmengeometrien zu kaufen. Insgesamt ist eine Abstimmung zur Reduktion von Geräuschen bei der Benutzung des Fahrrads schwierig oder sogar überhaupt nicht möglich.

### Darstellung der Erfindung

Ein erster Aspekt betrifft eine Befestigungsanordnung für eine Befestigung eines Fahrradantriebs an einem Fahrradrahmen. Mit der Befestigungsanordnung kann der Fahrradantrieb an einem Fahrradrahmen des Fahrrads befestigbar sein. Ein Fahrrad kann beispielsweise als Mountainbike, Tourenrad oder Stadtrad ausgebildet sein. Das Fahrrad kann als Pedelec ausgebildet sein. Der Fahrradantrieb kann beispielsweise eine Tretkurbelwelle, ein Getriebe und einen optionalen Antriebsmotor, beispielsweise ausgebildet als Elektromotor, aufweisen. Der Fahrradantrieb kann ein Kraftübertragungselement zu einem Abtriebselement des Fahrrads, wie einem Laufrad aufweisen, beispielsweise ausgebildet als Kette oder Riemen. Der Fahrradantrieb kann dazu ausgebildet sein, eine Antriebskraft von einem Fahrradfahrer und optional von dem Antriebsmotor an das Laufrad zu übertragen. Der Fahrradantrieb kann beispielsweise als Mittelmotorantrieb ausgebildet sein. Der Fahrradantrieb kann ein Gehäuse aufweisen. Der Fahrradrahmen kann beispielsweise aus Aluminium, Carbon oder Stahl gebildet sein. Der Fahrradrahmen kann mehrere miteinander verbundene Rohre aufweisen. Der Fahrradrahmen kann auch einstückig ausgebildet sein. Der Fahrradrahmen kann eine Antriebsaufnahme für einen Fahrradantrieb ausbilden. An dem Fahrradrahmen kann ein Sattel, eine Gabel, ein Lenker und zwei Laufräder des Fahrrads befestigt sein. Der Fahrradantrieb und der Fahrradrahmen können Teil der Befestigungsanordnung sein.

Die Befestigungsanordnung weist ein Befestigungsmittel auf. Damit kann der Fahrradantrieb an einer Stelle mit dem Fahrradrahmen befestigt sein. Es können auch mehrere Befestigungsmittel und damit mehrere Befestigungsstellen vorgesehen sein. Die Befestigungsstellen können voneinander beabstandet sein. Pro Befestigungsmittel kann je ein Dämpfungselement vorgesehen sein, dessen Eigenschaften noch im Folgenden beschrieben werden. Jedes Dämpfungselement kann gleich oder unterschiedlich ausgebildet sein. Das Befestigungsmittel kann beispielsweise als Schraube, Schraube und Mutter, Schnellspanner, Niet, oder integrales Teil des Fahrradantriebs oder des Fahrradrahmens ausgebildet sein. Das Befestigungsmittel kann einteilig oder mehrteilig ausgebildet sein. Das Befestigungsmittel kann für ein Spannen ausgebildet sein, um den Fahrradantrieb an dem Fahrradrahmen festzusetzen. Jeweilige Befestigungsmittel können die einzige Verbindung zwischen dem Fahrradantrieb und dem Fahrradrahmen sein. Die Befestigungsanordnung kann einen Spalt zwischen dem Fahrradantrieb und dem Fahrradrahmen aufweisen. Der Fahrradantrieb und der Fahrradrahmen können kontaktfrei angeordnet sein.

Die Befestigungsanordnung weist ein Dämpfungselement auf. Das Dämpfungselement ist beispielsweise als elastisches Element ausgebildet. Das Dämpfungselement kann dazu ausgebildet sein, eine Übertragung von Schwingungen von dem Fahrradantrieb an den Fahrradrahmen zu dämpfen. Dadurch kann beispielsweise ein im Betrieb durch den Fahrradrahmen emittierter Körperschall reduziert werden. Eine Schwingungsanregung des Fahrradrahmens durch den Fahrradantrieb kann durch das Dämpfungselement gedämpft sein. Das Dämpfungselement kann schwingungsdämpfende Eigenschaften haben. Das Dämpfungselement kann beispielsweise aus einem Elastomer oder Gummi gebildet sein.

Das Dämpfungselement ist zwischen dem Befestigungsmittel und einem Halteelement angeordnet. Das Halteelement kann ein Teil der Befestigungsanordnung sein. Beispielsweise ist das Halteelement der Fahrradrahmen oder der Fahrradantrieb. Das Halteelement kann integral durch einen Abschnitt davon oder durch ein daran befestigtes Bauteil gebildet sein. Durch die Anordnung des Dämpfungselements zwischen dem Befestigungsmittel und entweder dem Fahrradrahmen oder dem Fahrradantrieb müssen Schwingungen zur Übertragung beispielsweise das Dämpfungselement passieren und können so effizient gedämpft werden. Das Fahrrad kann im Betrieb so besonders leise sein. Im Folgenden wird in beispielhaften Erläuterungen hauptsächlich der Fahrradrahmen als Halteelement beschrieben. Die entsprechenden Erläuterungen können aber ebenso für eine Bauweise gelten, bei welcher eine umgekehrte Anordnung, also mit dem Dämpfungselement zwischen dem Fahrradantrieb und dem Befestigungsmittel, genutzt wird.

In einer Ausführungsform der Befestigungsanordnung kann es vorgesehen sein, dass das Dämpfungselement dazu ausgebildet ist, eine Dämpfwirkung in einer axialen Richtung des Befestigungsmittels zwischen dem Befestigungsmittel und dem Haltelement bereitzustellen. Beispielsweise kann das Befestigungsmittel als längliches Bauteil, beispielsweise eine Schraube, ausgebildet sein. Das Dämpfungselement kann dazu ausgebildet sein, Schwingungsübertragungen von dem Fahrradantrieb an den Fahrradrahmen axial entlang einer Längserstreckung des Befestigungsmittels zu dämpfen. Alternativ oder zusätzlich ist das Dämpfungselement dazu ausgebildet, eine Dämpfinrirkung in einer radialen Richtung des Befestigungsmittels zwischen dem Befestigungsmittel und dem Haltelement bereitzustellen. Das Dämpfungselement kann dazu ausgebildet sein, Schwingungsübertragungen von dem Fahrradantrieb an den Fahrradrahmen quer, beispielsweise orthogonal, zu der Längserstreckung des Befestigungsmittels zu dämpfen. Durch die Dämpfung in zwei Richtungen können besonders viele Schwingungen bei der Übertragung an den Fahrradrahmen gedämpft werden.

In einer Ausführungsform der Befestigungsanordnung kann es vorgesehen sein, dass das Halteelement eine Durchgangsöffnung aufweist, durch welche sich das Befestigungsmittel erstreckt. Beispielsweise kann der Fahrradrahmen in einer Rohrwandung die Durchgangsöffnung aufweisen. Beispielsweise kann das Gehäuse des Fahrradantriebs in einem Vorsprung oder einer Gehäusewand die Durchgangsöffnung aufweisen. Die Durchgangsöffnung kann auch durch ein vorstehendes Bauteil des Halteelements gebildet sein. Die Durchgangsöffnung kann durch eine Mantelfläche begrenzt sein. Die Mantelfläche kann einen Durchbruch aufweisen. Die Durchgangsöffnung kann aber auch durch eine durchgehende Mantelfläche begrenzt sein. Beispielsweise kann das Befestigungsmittel einen Kopf aufweisen, welcher beispielsweise größer als ein kleinster Durchmesser der Durchgangsöffnung ist und so den Fahrradantrieb an dem Fahrradrahmen sichert. In der Durchgangsöffnung kann ein Teil des Befestigungsmittels angeordnet sein. Die Durchgangsöffnung kann beispielsweise zylindrisch oder konisch ausgebildet sein. Eine Form der Durchgangsöffnung, beispielsweise ein Querschnitt der Durchgangsöffnung, kann zu einer Form des Dämpfungselements korrespondieren.

Das Dämpfungselement kann wenigstens teilweise ebenfalls in der Durchgangsöffnung des Halteelements angeordnet sein. So kann das Dämpfungselement beispielsweise das Befestigungsmittel in der Durchgangsöffnung von dem Halteelement entkoppeln und so die Schwingungsübertragung zuverlässig dämpfen. Das Dämpfungselement kann sich durch die Durchgangsöffnung vollständig oder teilweise hindurch erstrecken. Das Dämpfungselement kann von der Durchgangsöffnung vorstehen. Das Dämpfungselement kann vollständig in der Durchgangsöffnung aufgenommen sein. Das Dämpfungselement kann teilweise in einer Ausnehmung angeordnet sein, welche durch den Fahrradantrieb oder den Fahrradrahmen ausgebildet ist, beispielsweise je nachdem, welches dieser Bauteile nicht das Halteelement bildet.

In einer Ausführungsform der Befestigungsanordnung kann es vorgesehen sein, dass das Dämpfungselement das Befestigungsmittel außenseitig wenigstens im Bereich der Durchgangsöffnung des Halteelements umgibt. Dadurch kann großflächig ein Anliegen des Befestigungsmittels an dem Dämpfungselement erreicht werden. Dadurch ist eine gute Schwingungsdämpfung möglich und gleichzeitig eine stabile Befestigung mit wenig Spiel. Beispielsweise kann durch das außenseitige Umgeben in radialer Richtung gedämpft werden. Das Dämpfungselement kann beispielsweise in einem Dämpfungselementbereich, welcher in der Durchgangsöffnung angeordnet ist, das Befestigungsmittel außenseitig umgeben. Alternativ oder zusätzlich kann das Dämpfungselement das Befestigungsmittel in einem axialen Bereich außerhalb der Durchgangsöffnung des Halteelements umgeben. Das Dämpfungselement weist beispielsweise eine Durchgangsöffnung auf, in welcher das Befestigungsmittel wenigstens teilweise angeordnet ist. Die Durchgangsöffnung des Dämpfungselements kann zentral in einem Körper des Dämpfungselements angeordnet sein. Beispielsweise kann sich das Befestigungsmittel durch das Dämpfungselement hindurch erstrecken. Ein Innendurchmesser der Durchgangsöffnung des Dämpfungselements kann zu einem Außendurchmesser des Bereichs des Befestigungsmittels, welcher in der Durchgangsöffnung des Dämpfungselements angeordnet ist, korrespondieren. Das Befestigungsmittel kann beispielsweise mit einer Presspassung oder einer Spielpassung in der Durchgangsöffnung des Dämpfungselements angeordnet sein.

In einer Ausführungsform der Befestigungsanordnung kann es vorgesehen sein, dass das Dämpfungselement mit einer Presspassung in der Durchgangsöffnung des Halteelements angeordnet ist. Beispielsweise kann ein Außendurchmesser des Dämpfungselements wenigstens bereichsweise größer sein als ein Innendurchmesser der Durchgangsöffnung des Halteelements. Durch die Presspassung kann das Dämpfungselement in radialer Richtung vorgespannt sein. Dadurch kann die Dämpfung der Schwingungsübertragung in radialer Richtung besonders hoch sein. Zudem kann der Fahrradantrieb so sicher in einer definierten Position gehalten sein.

In einer Ausführungsform der Befestigungsanordnung kann es vorgesehen sein, dass das Dämpfungselement konisch ausgebildet ist. Beispielsweise kann das Dämpfungselement einen konisch zulaufenden Außendurchmesser aufweisen. Das Dämpfungselement kann durch Befestigen des Befestigungsmittels axial gegen den Fahrradrahmen oder den Fahrradantrieb gepresst werden. Durch die konische Form kann das Dämpfungselement dann auch radial gepresst werden. Es kann sich eine Vorspannung ergeben. Dadurch kann die Dämpfung der Schwingungsübertragung in radialer Richtung besonders hoch sein. Zudem kann der Fahrradantrieb so sicher in einer definierten Position gehalten sein. Zudem kann das Dämpfungselement so besonders einfach montiert werden. Das Dämpfungselement kann beispielsweise einfach in die Durchgangsöffnung des Halteelements eingelegt werden. Bei Lösen des Befestigungsmittels kann das Dämpfungselement gegebenenfalls einfach wieder aus dem Halteelement entnommen werden und beispielsweise bei Verschleiß schnell ausgetauscht werden. Beispielsweise kann die Durchgangsöffnung des Halteelements eine zu der konischen Form des Dämpfungselements korrespondierende konische Form aufweisen. Die Durchgangsöffnung des Halteelements kann dabei in einem geringeren Durchmesser münden als das Dämpfungselement. Dadurch kann auch ein Durchrutschen des Dämpfungselements zuverlässig verhindert werden.

Alternativ kann das Dämpfungselement eine zylindrische Form aufweisen. Der Außendurchmesser des Dämpfungselements kann beispielsweise konstant sein. Die Durchgangsöffnung des Halteelements kann dazu korrespondierend zylindrisch ausgebildet sein. Das Dämpfungselement kann so besonders einfach zu fertigen sein.

In einer Ausführungsform der Befestigungsanordnung kann es vorgesehen sein, dass das Befestigungsmittel eine Stirnseite aufweist, mit welcher das Befestigungsmittel auf dem Dämpfungselement aufliegt. Dadurch kann besonders gut in der axialen Richtung die Schwingungsübertragung gedämpft werden. Die Stirnseite kann beispielsweise mit dem Halteelement kontaktfrei sein. Die Stirnseite kann beispielsweise durch einen Schraubenkopf gebildet werden. Die Stirnseite kann einen größeren Durchmesser als wenigstens ein Ende der Durchgangsöffnung des Halteelements aufweisen und alternativ oder zusätzlich ein Ende der Durchgangsöffnung des Dämpfungselements, in welcher das Befestigungsmittel angeordnet ist. Das Dämpfungselement kann beispielsweise wenigstens teilweise axial zwischen der Stirnseite und dem Fahrradrahmen und alternativ oder zusätzlich dem Fahrradantrieb angeordnet sein.

In einer Ausführungsform der Befestigungsanordnung kann es vorgesehen sein, dass das Dämpfungselement einen ersten Teilbereich mit einer ersten Dämpfungseigenschaft aufweist und einen zweiten Teilbereich mit einer zweiten Dämpfungseigenschaft. Die erste Dämpfungseigenschaft kann sich von der zweiten Dämpfungseigenschaft unterscheiden. Beispielsweise kann der erste Teilbereich durch ein anderes Material als der zweite Teilbereich gebildet werden. Das Material in dem ersten Teilbereich kann beispielsweise eine andere Elastizität als das Material in dem zweiten Teilbereich aufweisen. Die Dämpfungseigenschaften können beispielsweise von einer Geometrie der Teilbereiche unabhängig sein. Die Dämpfungseigenschaften können Materialeigenschaften sein. Das Dämpfungselement kann auch drei oder mehr Teilbereiche mit unterschiedlichen Dämpfungseigenschaften aufweisen. Durch die Teilbereiche können beispielsweise Schwingungen in unterschiedlichen Frequenzbereichen besonders gut gedämpft werden. So kann eine Gesamtdämpfung an die wesentlichen für eine Geräuschentwicklung relevanten Schwingungen und jeweilige hauptsächlich durch den Fahrradantrieb erzeugte Schwingungen angepasst werden. Auch eine Anpassung an unterschiedliche Resonanzfrequenzen von Fahrradrahmen ist so einfach möglich. Zudem können durch die unterschiedlichen Teilbereiche noch weitere Funktionen ermöglicht werden. Beispielsweise kann ein erster dem Fahrradantrieb zugewandter Teilbereich zunächst Schwingungen gut dämpfen und ein zweiter dem Fahrradantrieb abgewandter Teilbereich dann eine besonders feste Halterung des Fahrradantriebs ermöglichen, ohne dabei die Schwingungsdämpfung wesentlich zu beeinflussen.

In einer Ausführungsform der Befestigungsanordnung kann es vorgesehen sein, dass das Dämpfungselement ein erstes Dämpfungsteil und ein dazu separates zweites Dämpfungsteil aufweist. Durch separate Teile können jeweilige Teilbereiche mit unterschiedlichen Dämpfungseigenschaften einfach bereitgestellt werden. Das erste Dämpfungsteil bildet den ersten Teilbereich und das zweite Dämpfungsteil den zweiten Teilbereich. Beide Dämpfungsteile können beispielsweise zylindrisch oder konisch ausgebildet sein. Es kann für jeden Teilbereich mit unterschiedlichen Dämpfungseigenschaften jeweils ein Dämpfungsteil vorgesehen sein. Die Dämpfungsteile können beispielsweise aufeinander aufliegen. Die Dämpfungsteile können einen gemeinsamen Körper bilden, beispielsweise mit durchgehender Außenkontur. Die Dämpfungsteile können nicht fest miteinander verbunden sein. Dann kann die Fertigung besonders einfach sein. Die Dämpfungsteile können aber auch verbunden sein, beispielsweise durch eine Verklebung. Dann kann eine Montage besonders einfach sein. Die Dämpfungsteile können in axialer Richtung hintereinander angeordnet sein. Die Dämpfungsteile können jeweils einen Dämpfer bilden, wobei diese Dämpfer in Reihe geschaltet sind.

In einer Ausführungsform der Befestigungsanordnung kann es vorgesehen sein, dass das Dämpfungselement einstückig ausgebildet ist. Beispielsweise kann das Dämpfungselement in einem Spritzgussverfahren hergestellt worden sein. Das Dämpfungselement kann aus einem einheitlichen Material einstückig ausgebildet sein. Dann kann die Fertigung besonders kostengünstig sein. Das Dämpfungselement kann auch aus unterschiedlichen Materialien einstückig ausgebildet sein. Beispielsweise kann das Dämpfungselement in einem 2k-Spritzgussverfahren hergestellt worden sein. Dann kann ein einstückiges Bauteil mit unterschiedlichen Teilbereichen mit unterschiedlichen Dämpfungseigenschaften einfach bereitgestellt werden.

In einer Ausführungsform der Befestigungsanordnung kann es vorgesehen sein, dass das Befestigungsmittel kontaktfrei mit dem Haltelement ist. Beispielsweise kann das Befestigungsmittel den Fahrradrahmen nicht berühren. Auch der Fahrradrahmen und der Fahrradantrieb können kontaktfrei sein. Durch die Kontaktfreiheit kann eine unerwünschte Schwingungsübertragung an dem Dämpfungselement vorbei vermieden werden. Beispielsweise ist das Befestigungsmittel nur mittelbar über das Dämpfungselement an dem Fahrradrahmen abgestützt. Beispielsweise ist der Fahrradrahmen zwischen dem Befestigungsmittel und dem Fahrradantrieb geklemmt.

Ein zweiter Aspekt betrifft ein Fahrrad mit einem Fahrradrahmen. Das Fahrrad weist zudem einen Fahrradantrieb auf. Der Fahrradantrieb ist mittels einer Befestigungsanordnung gemäß dem ersten Aspekt an dem Fahrradrahmen befestigt. Das Fahrrad kann die Befestigungsanordnung gemäß dem ersten Aspekt aufweisen. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden. Das Fahrrad kann ein Abtriebselement aufweisen. Das Abtriebselement kann beispielsweise als Laufrad ausgebildet sein. Das Abtriebselement kann durch den Fahrradantrieb antreibbar sein. Beispielsweise kann das Abtriebselement mit einer Abtriebswelle des Fahrradantriebs mechanisch wirkverbunden sein.

### Kurze Beschreibung der Figuren

Fig. 1 veranschaulicht in einer schematischen Seitenansicht ein Fahrrad mit einem Fahrradrahmen und einem daran befestigen Fahrradantrieb.
Fig. 2 veranschaulicht schematisch in einer Schnittansicht eine erste Ausführungsform einer Befestigungsanordnung zum Befestigen des Fahrradantriebs an dem Fahrradrahmen bei dem Fahrrad gemäß Fig. 1.
Fig. 3 veranschaulicht schematisch in einer Schnittansicht eine zweite Ausführungsform einer Befestigungsanordnung zum Befestigen des Fahrradantriebs an dem Fahrradrahmen bei dem Fahrrad gemäß Fig. 1.
Fig. 4 veranschaulicht die Befestigung des Fahrradantriebs mittels der Befestigungsanordnungen von Fig. 2 und Fig. 3 an dem Fahrradrahmen.

### Detaillierte Beschreibung von Ausführungsformen

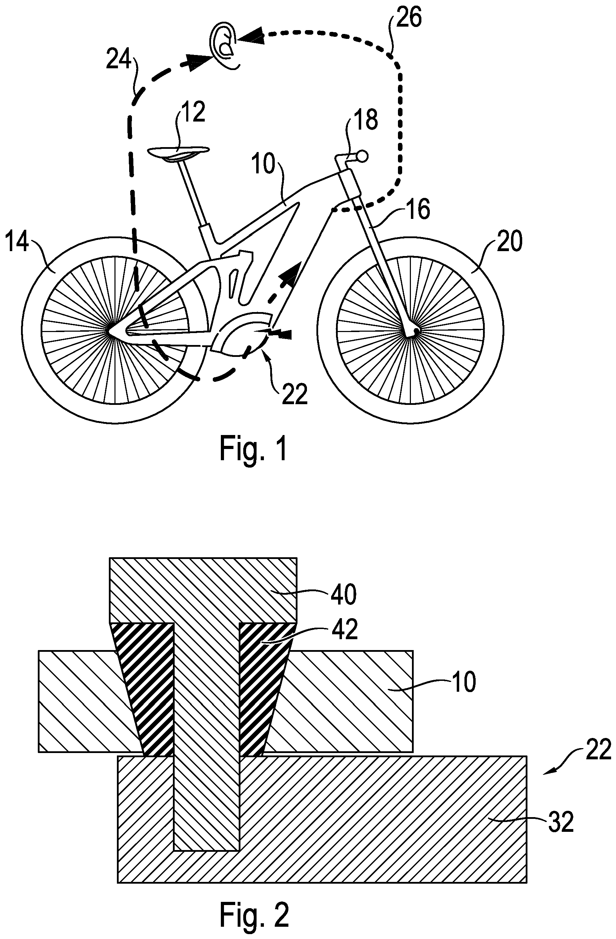

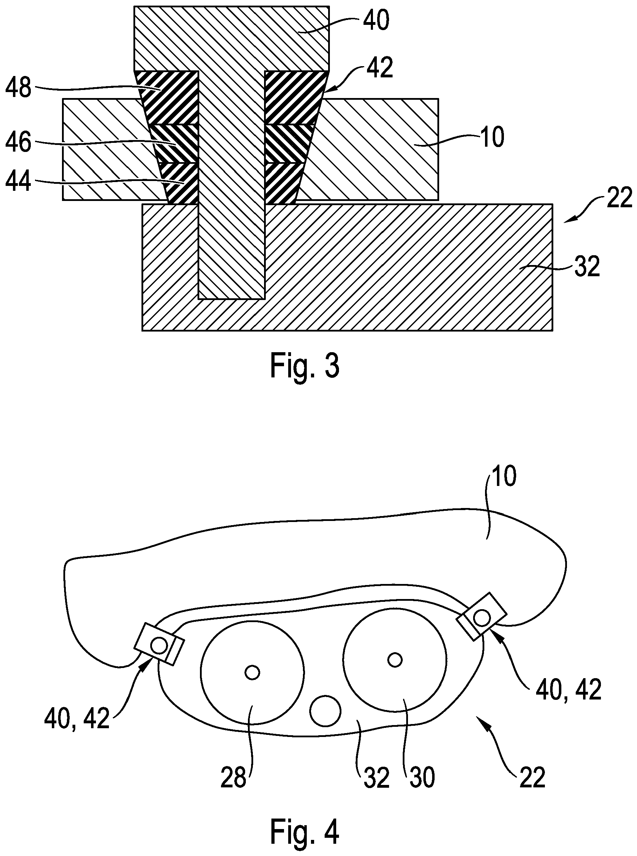

Fig. 1 veranschaulicht schematisch in einer Seitenansicht ein Fahrrad, welches als Pedelec ausgebildet ist. Das Fahrrad weist einen Fahrradrahmen 10 auf. An dem Fahrradrahmen 10 ist ein Sattel 12 und ein Hinterrad 14 montiert. Vorderseitig ist an dem Fahrradrahmen 10 eine Gabel 16 montiert, an welcher ein Lenker 18 und ein Vorderrad 20 gehalten sind. Zudem weist das Fahrrad einen Fahrradantrieb 22 auf. Der Fahrradantrieb 22 ist mittels einer Befestigungsanordnung an dem Fahrradrahmen 10 gehalten, welche weiter unten anhand von Figs. 2 und 3 beschrieben wird.

Beim Fahren erzeugt der Fahrradantrieb 22 Schwingungen, welche Geräusche verursachen. Zum einen strahlt der Fahrradantrieb 22 direkt Luftschall ab, welcher durch einen Pfeil 24 veranschaulicht ist. Durch den Benutzer wird dieser Luftschall als von dem Fahrradantrieb 22 verursacht wahrgenommen. Zudem wird ein Teil der Schwingungen über eine Befestigung des Fahrradantriebs 22 als Körperschall an den Fahrradrahmen 10 übertragen. Dadurch fangen Teile von freien Oberflächen des wenigstens teilweise hohlen Fahrradrahmens 10 an zu schwingen und geben so ebenfalls Geräusche in Form von Luftschall ab, welcher durch einen Pfeil 26 veranschaulicht wird. In dem gezeigten Beispiel wird der Luftschall vom Fahrradrahmen 10 hauptsächlich im Bereich eines Steuersatzes abgestrahlt. Durch den Benutzer wird dieser Luftschall dann als von dort durch den Fahrradrahmen 10 verursacht wahrgenommen. Dadurch kann der Benutzer dort irrtümlich eine Beschädigung annehmen. Insgesamt sollen im Fahrbetrieb durch den Fahrradantrieb 22 so wenig Geräusche wie möglich verursacht werden.

In Fig. 4 ist zu erkennen, dass der Fahrradantrieb 22 eine Tretkurbelwelle 28 und einen Elektromotor 30 aufweist. Die Tretkurbelwelle 28 ist teilweise in einem Gehäuse 32 des Fahrradantriebs 22 aufgenommen und erstreckt sich durch das Gehäuse 32 in einer Querrichtung hindurch. Der Elektromotor 30 ist vollständig in dem Gehäuse 32 aufgenommen. Mit der Tretkurbelwelle 28 und dem Elektromotor 30 ist das Hinterrad 14 des Fahrrads über eine mechanische Wirkverbindung antreibbar.

In Fig. 2 ist schematisch eine erste Ausführungsform der Befestigungsanordnung gezeigt. Diese Befestigungsanordnung verringert ein Übertragen von Körperschall von dem Fahrradantrieb 22 an den Fahrradrahmen 10. Die Befestigungsanordnung entkoppelt den Fahrradantrieb 22 wenigstens teilweise akustisch von dem Fahrradrahmen 10.

In Fig. 2 ist schematisch eine Befestigungsstelle des Gehäuses 32 und damit des Fahrradantriebs 22 an dem Fahrradrahmen 10 gezeigt. Die Befestigungsanordnung weist ein Befestigungsmittel 40 auf, welches als Schraube ausgebildet ist. Das Befestigungsmittel 40 ist an dem Gehäuse 32 befestigt, hier indem die Schraube in ein korrespondierendes Gewinde in einem Sackloch des Gehäuses 32 eingeschraubt ist. Das Befestigungsmittel 40 erstreckt sich durch eine Durchgangsöffnung in dem Fahrradrahmen 10 axial mit einem Schraubenschaft, also mit seiner Längserstreckung, hindurch. Das Befestigungsmittel 40 hält so den Fahrradantrieb 22 an dem Fahrradrahmen 10 als Halteelement. In einer anderen Ausführungsform ist das Befestigungsmittel 40 in ein Sackloch an dem Fahrradrahmen 10 eingeschraubt und erstreckt sich durch eine Durchgangsöffnung an dem Gehäuse 32 des Fahrradantriebs, um den Fahrradrahmen 10 an dem Fahrradantrieb 22 als Halteelement zu halten.

Zwischen dem Fahrradrahmen 10 und dem Befestigungsmittel 40 ist ein Dämpfungselement 42 angeordnet. In der gezeigten ersten Ausführungsform ist das Dämpfungselement 42 einstückig und elastisch ausgebildet. Das Dämpfungselement 42 erstreckt sich durch die Durchgangsöffnung des Fahrradrahmens 10 hindurch und ist länger als die Durchgangsöffnung. Das Dämpfungselement 42 weist eine konische Außenform auf. Die Durchgangsöffnung des Fahrradrahmens 10 ist dazu korrespondierend konisch geformt. Das Dämpfungselement 42 umgibt das Befestigungsmittel 40 außenseitig im Bereich des Schraubenschafts. Dafür weist das Dämpfungselement 42 zentral eine Durchgangsöffnung auf, welche zylindrisch ausgebildet ist. Die Durchgangsöffnung des Dämpfungselements 42 korrespondiert in deren Form zu einer Form des Schraubenschaftes.

Ein Schraubenkopf des Befestigungsmittels 40 liegt mit einer Stirnseite, welche dem Schraubenschaft zugewandt ist, auf einer Stirnseite des Dämpfungselements 42 auf, welche dem Fahrradantrieb 22 abgewandt ist. Beim Anziehen des Befestigungsmittels 40 wird das Dämpfungselement 42 in die konische Durchgangsöffnung des Fahrradrahmens 10 eingepresst. Dadurch ergibt sich auch eine radiale Pressung. Der Schraubenschaft ist so in der gezeigten Ausführungsform von innen gegen das Dämpfungselement 42 in der Durchgangsöffnung des Dämpfungselements 42 gepresst. So kann das Dämpfungselement 42 eine Dämpfwirkung in einer axialen Richtung des Befestigungsmittels 40 und in einer radialen Richtung des Befestigungsmittels 40 zwischen dem Befestigungsmittel 40 und dem Fahrradrahmen 10 bereitstellen. Es ergibt sich zudem eine spielfreie Verbindung an der gezeigten Befestigungsstelle. Das Dämpfungselement 42 liegt mit seiner dem Schraubenkopf abgewandten Seite an dem Gehäuse 32 des Fahrradantriebs 22 an.

Das Befestigungsmittel 40 ist dabei kontaktfrei mit dem Fahrradrahmen 10. Der Fahrradrahmen 10 und der Fahrradantrieb 22 sind ebenfalls kontaktfrei. In Fig. 4 ist besonders gut zu erkennen, dass zwischen dem Gehäuse 32 und dem Fahrradrahmen 10 ein Spalt vorgesehen ist. Zudem ist in Fig. 4 zu erkennen, dass das Gehäuse 32 an zwei Befestigungsstellen mit der in Fig. 2 veranschaulichten Befestigungsanordnung an dem Fahrradrahmen 10 befestigt ist.

Fig. 3 veranschaulicht eine zweite Ausführungsform der Befestigungsanordnung. Es werden im Folgenden Unterschiede zu der ersten Ausführungsform erläutert. Bei der zweiten Ausführungsform ist das Dämpfungselement 42 mehrteilig ausgebildet. Das Dämpfungselement 42 weist in dem gezeigten Beispiel ein erstes Dämpfungsteil 44, ein dazu separates zweites Dämpfungsteil 46 und ein dazu ebenfalls separates drittes Dämpfungsteil 48 auf. Jeder dieser drei separaten Dämpfungsteile 44, 46, 48 bildet einen axialen Teilbereich des Dämpfungselements 42 aus. Jedes Dämpfungsteil 44, 46, 48 weist eine konische Außenform und eine zentrale Durchgangsöffnung mit identischem Durchmesser auf. Die Außenkonturen der Dämpfungsteile 44, 46, 48 gehen glatt ineinander über.

Jeder Teilbereich des Dämpfungselements 42 weist unterschiedliche Dämpfungseigenschaften auf. Zu diesem Zweck ist jedes Dämpfungsteil 44, 46, 48 aus einem anderen Material gebildet. Die Materialien unterscheiden sich in der gezeigten Ausführungsform durch deren Elastizität. Die Dämpfungsteile 44, 46, 48 sind axial in Reihe geschaltet und stellen jeweils eine Dämpfwirkung in der axialen Richtung des Befestigungsmittels 40 und in der radialen Richtung des Befestigungsmittels 40 zwischen dem Befestigungsmittel 40 und dem Fahrradrahmen 10 bereit.

Statt drei Dämpfungsteile 44, 46, 48 weisen andere Ausführungsformen nur zwei oder auch vier oder mehr Dämpfungsteile auf. Ebenso weisen andere Ausführungsformen Dämpfungselemente 42 mit zwei, vier oder mehr Teilbereichen mit unterschiedlichem Material und alternativ oder zusätzlich unterschiedlichen Dämpfungseigenschaften auf. Alternativ zu der mehrteiligen Gestaltung sind in einer anderen Ausführungsform die unterschiedlichen Teilbereiche auch durch ein einstückiges Dämpfungselement 42 ausgebildet, welches in einem Mehrkomponentenspritzgussverfahren hergestellt wurde und Bereiche mit unterschiedlichem Material aufweist, In noch einer anderen Ausführungsform sind das Dämpfungselement 42 und die Durchgangsöffnung in dem Fahrradrahmen 10 zylindrisch ausgebildet, wobei eine Presspassung vorgesehen ist.

### Bezugszeichen

- 10: Fahrradrahmen
- 12: Sattel
- 14: Hinterrad
- 16: Gabel
- 18: Lenker
- 20: Vorderrad
- 22: Fahrradantrieb
- 24: Pfeil / Schallemission
- 26: Pfeil / Schallemission
- 28: Tretkurbelwelle
- 30: Elektromotor
- 32: Gehäuse
- 40: Befestigungsmittel
- 42: Dämpfungselement
- 44: erstes Dämpfungsteil
- 46: zweites Dämpfungsteil
- 48: drittes Dämpfungsteil

## Patentansprüche

1. Befestigungsanordnung für eine Befestigung eines Fahrradantrieb (22) an einem Fahrradrahmen (10), wobei die Befestigungsanordnung ein Befestigungsmittel (40) und ein Dämpfungselement (42) aufweist, wobei das Dämpfungselement (42) zwischen dem Befestigungsmittel (40) und einem Halteelement angeordnet ist.

2. Befestigungsanordnung nach Anspruch 1, **dadurch gekennzeichnet, dass** das Haltelement als der Fahrradrahmen (10) ausgebildet ist.

3. Befestigungsanordnung nach Anspruch 1, **dadurch gekennzeichnet, dass** das Haltelement als der Fahrradantrieb (22) ausgebildet ist.

4. Befestigungsanordnung nach einem der vorhergehenden Ansprüche, **dadurch gekennzeichnet, dass** das Dämpfungselement (42) dazu ausgebildet ist, eine Dämpfinrirkung in einer axialen Richtung des Befestigungsmittels (40) und in einer radialen Richtung des Befestigungsmittels (40) zwischen dem Befestigungsmittel (40) und dem Haltelement bereitzustellen.

5. Befestigungsanordnung nach einem der vorhergehenden Ansprüche, **dadurch gekennzeichnet, dass** das Halteelement eine Durchgangsöffnung aufweist, durch welche sich das Befestigungsmittel (40) erstreckt, wobei das Dämpfungselement (42) wenigstens teilweise ebenfalls in der Durchgangsöffnung des Halteelements angeordnet ist.

6. Befestigungsanordnung nach 5, **dadurch gekennzeichnet, dass** das Dämpfungselement (42) das Befestigungsmittel (40) außenseitig wenigstens im Bereich der Durchgangsöffnung des Halteelements umgibt.

7. Befestigungsanordnung nach Anspruch 5 oder 6, **dadurch gekennzeichnet, dass** das Dämpfungselement (42) mit einer Presspassung in der Durchgangsöffnung des Halteelements angeordnet ist.

8. Befestigungsanordnung nach einem der vorhergehenden Ansprüche, **dadurch gekennzeichnet, dass** das Dämpfungselement (42) konisch ausgebildet ist.

9. Befestigungsanordnung nach einem der vorhergehenden Ansprüche, **dadurch gekennzeichnet, dass** das Befestigungsmittel (40) eine Stirnseite aufweist, mit welcher das Befestigungsmittel (40) auf dem Dämpfungselement (42) aufliegt.

10. Befestigungsanordnung nach einem der vorhergehenden Ansprüche, **dadurch gekennzeichnet, dass** das Dämpfungselement (42) einen ersten Teilbereich mit einer ersten Dämpfungseigenschaft und einen zweiten Teilbereich mit einer zweiten Dämpfungseigenschaft aufweist, wobei sich die erste Dämpfungseigenschaft von der zweiten Dämpfungseigenschaft unterscheidet.

11. Befestigungsanordnung nach einem der vorhergehenden Ansprüche, **dadurch gekennzeichnet, dass** das Dämpfungselement (42) ein erstes Dämpfungsteil (44) und ein dazu separates zweites Dämpfungsteil (46) aufweist, wobei das erste Dämpfungsteil (44) den ersten Teilbereich bildet und das zweite Dämpfungsteil (46) den zweiten Teilbereich.

12. Befestigungsanordnung nach einem der vorhergehenden Ansprüche 1 bis 10, **dadurch gekennzeichnet, dass** das Dämpfungselement (42) einstückig ausgebildet ist.

13. Befestigungsanordnung nach einem der vorhergehenden Ansprüche, **dadurch gekennzeichnet, dass** das Befestigungsmittel (40) kontaktfrei mit dem Haltelement ist.

14. Fahrrad mit einem Fahrradrahmen (10) und einem Fahrradantrieb (22), wobei der Fahrradantrieb (22) mit einer Befestigungsanordnung nach einem der vorhergehenden Ansprüche an dem Fahrradrahmen (10) befestigt ist.
